# EUROPÄISCHE PATENTANMELDUNG

(11) **EP 3 290 722 A1**
(43) Veröffentlichungstag der Anmeldung: **07.03.2018**
(21) Anmeldenummer: 16186742.9
(22) Anmeldetag: 01.09.2016
(51) Int. Cl.: F16B 13/14

(54) **ANKERSTANGE FÜR EIN VERBUNDANKERSYSTEM**

(71) Anmelder: HILTI Aktiengesellschaft, 9494 Schaan (LI)
(72) Erfinder: Renner, Markus, 86438 Kissing (DE); Ginter, Herbert, 87656 Germaringen (DE)
(74) Vertreter: Hilti Aktiengesellschaft Corporate Intellectual Property

(57) **Zusammenfassung**

Eine Ankerstange (10) für ein Verbundankersystem hat einen Verankerungsbereich (22) und einen Befestigungsbereich (24). Der Verankerungsbereich (22) weist wenigstens einen Rückhalteabschnitt (30) für Mörtelmasse (20) auf, nämlich ein Rückhaltegewinde oder mehrere Ringnuten.

## Beschreibung

Die Erfindung betrifft eine Ankerstange für ein Verbundankersystem mit einem Verankerungsbereich und einem Befestigungsbereich.

Bei Verbundankersystemen wird eine Ankerstange in einem Bohrloch mithilfe von Mörtel befestigt, wobei der Mörtel als Mörtelpatrone oder als Mörtelpaste in das Bohrloch eingebracht wird. Üblicherweise besteht der Mörtel in einem Verbundankersystem aus zwei Komponenten, die beim Setzen der Ankerstange im Bohrloch vermischt werden. Alternativ kann der Mörtel auch vorgemischt als Paste injiziert werden. Beim Setzen wird die Ankerstange mithilfe eines Bohrhammers oder -schraubers oder per Hand rotiert, sodass die Mörtelpatrone im Bohrloch zerstört wird, die Komponenten des Mörtels vermischt werden und sich die Mörtelmasse um die Ankerstange herum verteilt.

Um eine gleichmäßige Verteilung der Mörtelmasse um die Ankerstange und eine ausreichende Vermischung der beiden Komponenten des Mörtels sicherzustellen, weist die Ankerstange im Verankerungsbereich, also in dem Bereich, der in das Bohrloch eingesetzt wird, eine Profilierung auf, auch als Gewinde bezeichnet. Das Gewinde ist üblicherweise ein Rechtsgewinde.

Wird die Ankerstange übersetzt, d.h. nach Erreichen der notwendigen Setztiefe der Ankerstange und Vermischung des Mörtels weiter rotiert, so wirkt das Gewinde wie eine archimedische Schraube und fördert Teile der Mörtelmasse aus dem Bohrloch heraus. Durch das Herausfördern von Teilen der Mörtelmasse wird der Mörtel geschwächt, was zu einem Abfall der Haltewerte führen kann. Deswegen sind eine hohe Aufmerksamkeit und große Geschicklichkeit beim Setzen notwendig.

Es ist Aufgabe der Erfindung, eine Ankerstange bereitzustellen, die auch beim Übersetzen der Ankerstange wirksam verhindert, dass Mörtelmasse unkontrolliert aus dem Bohrloch heraus gefördert wird.

Die Aufgabe wird gelöst durch eine Ankerstange für ein Verbundankersystem mit einem Verankerungsbereich und einem Befestigungsbereich, wobei der Verankerungsbereich wenigstens einen Rückhalteabschnitt für Mörtelmasse aufweist, nämlich ein Rückhaltegewinde oder mehrere Ringnuten.

Durch das Rückhaltegewinde oder die mehreren Ringnuten werden Abschnitte im Verankerungsbereich erzeugt, die verhindern, dass Mörtelmasse bei Rotation der Ankerstange in Richtung der Mündung des Bohrloches gefördert wird. Durch diese Rückhalteabschnitte wird wirksam verhindert, dass Mörtelmasse beim Setzen, insbesondere beim Übersetzen der Ankerstange aus dem Bohrloch austritt, ohne dass Vorsprünge oder zusätzliche Teile an der Ankerstange vorgesehen sein müssen.

Beispielsweise ist an dem Ende des Befestigungsbereiches, das an den Verankerungsbereich angrenzt, eine Setztiefenmarkierung vorgesehen, die die Montage des Verbundankersystems erleichtert.

Der Rückhalteabschnitt kann sich entlang des gesamten Verankerungsbereichs erstrecken, sodass an keiner Stelle des Verankerungsbereiches die Mörtelmasse durch die Rotation der Ankerstange in Richtung der Mündung des Bohrloches bewegt wird.

In einer Ausgestaltung der Erfindung weist der Verankerungsbereich eine Profilierung auf, insbesondere ein Gewinde, vorzugsweise ein Rechtsgewinde, das von dem wenigstens einen Rückhalteabschnitt unterbrochen ist.

Unter dem Begriff "Gewinde" wird im Sinne der vorliegenden Erfindung auch eine Profilierung verstanden. Die Profilierung kann eine strukturierte Oberfläche sein, wie zum Beispiel eine profilierte Einkerbung. Diese Einkerbung kann fortlaufend wendelartig um eine zylinderförmige Wandung in einer Schraubenlinie verlaufen.

Üblicherweise werden Ankerstangen rechtsdrehend gesetzt, sodass die Mörtelmasse durch ein Rechtsgewinde zur Mündung des Bohrlochs befördert wird. Durch die Unterbrechung des Gewindes wird in dem Abschnitt der Unterbrechung somit die Förderung von Mörtelmasse in Richtung zur Mündung des Bohrlochs hin verhindert. Dabei kann das Gewinde bei Ankerstangen, für die eine linksdrehende Montage vorgesehen ist, auch ein Linksgewinde sein.

Vorzugsweise umfasst der wenigstens eine Rückhalteabschnitt ein zum Gewinde gegenläufiges Rückhaltegewinde, insbesondere ein Linksgewinde, sodass durch das Rückhaltegewinde Mörtelmasse in Richtung zum Grund des Bohrloches oder zur Spitze der Ankerstange hin gefördert wird. In Fällen, in denen die Ankerstange linksdrehend gesetzt wird, ist das Rückhaltegewinde ein Rechtsgewinde.

Beispielsweise gehen das Gewinde und das Rückhaltegewinde ineinander über, wodurch an jeder Stelle der Ankerstange die Mörtelmasse vermischt wird.

In einer Ausgestaltung der Erfindung weist der wenigstens eine Rückhalteabschnitt mindestens eine Ringnut auf, vorzugsweise drei, vier oder fünf Ringnuten, sodass im Rückhalteabschnitt kein Gewinde vorgesehen ist, das die Mörtelmasse bei Rotation in eine Richtung fördert.

In einer weiteren Ausführungsvariante sind der Rückhalteabschnitt und das Gewinde durch eine Trennung beabstandet, wodurch die Produktion der Ankerstange vereinfacht wird. Dabei ist die Trennung frei von Gewinden oder Nuten.

In einer Ausführungsform der Erfindung sind wenigstens zwei Rückhalteabschnitte vorgesehen, zwischen denen das Gewinde fortgesetzt ist. Auf diese Weise kann an mehreren Stellen und damit besonders effektiv verhindert werden, dass Mörtelmasse in Richtung der Mündung des Bohrloches gefördert wird. Dabei können die Rückhalteabschnitte verschieden ausgeführt sein. Zum Beispiel weist einer der Rückhalteabschnitte ein Gewinde und der andere Ringnuten auf.

Vorzugsweise ist der wenigstens eine Rückhalteabschnitt an dem Ende des Verankerungsbereiches vorgesehen, das an den Befestigungsbereich angrenzt, sodass der Rückhalteabschnitt im kritischen Bereich direkt an der Bohrlochmündung vorgesehen sein kann.

Der Befestigungsabschnitt kann ein zum Gewinde des Verankerungsabschnitts gleichläufiges Befestigungsgewinde, insbesondere ein Rechtsgewinde aufweisen, wodurch Lasten an der Ankerstange auf einfache Weise befestigt werden können.

Weitere Merkmale und Vorteile der Erfindung ergeben sich aus der nachfolgenden Beschreibung sowie aus den beigefügten Zeichnungen, auf die Bezug genommen wird. In den Zeichnungen zeigen:
- Figur 1 schematisch eine erfindungsgemäße Ankerstange, die in ein Bohrloch eingesetzt ist,
- Figur 2 eine Seitenansicht der Ankerstange nach Figur 1,
- Figur 3 eine Seitenansicht einer zweiten Ausführungsform einer erfindungsgemäßen Ankerstange,
- Figur 4 eine Seitenansicht einer dritten Ausführungsform einer erfindungsgemäßen Ankerstange,
- Figur 5 eine Seitenansicht einer vierten Ausführungsform einer erfindungsgemäßen Ankerstange, und
- Figur 6 einer Seitenansicht einer fünften Ausführungsform einer erfindungsgemäßen Ankerstange.

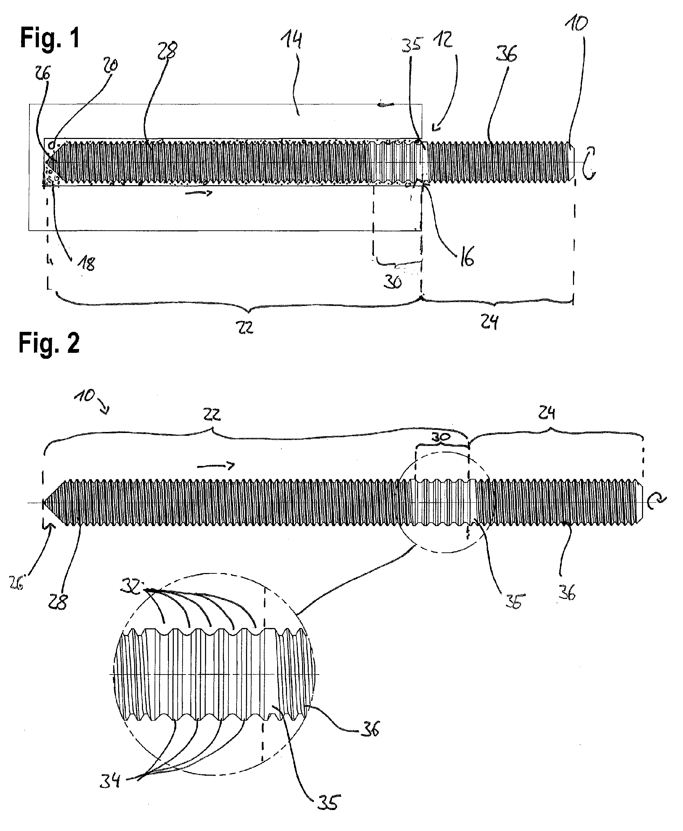

In Figur 1 ist eine Ankerstange 10 dargestellt, die in einem Bohrloch 12 in einem Verankerungsgrund 14, beispielsweise einer Wand, befestigt ist.

Das Bohrloch 12 weist eine Mündung 16 und einen Bohrlochgrund 18 auf und ist mit Mörtelmasse 20 gefüllt.

Die Mörtelmasse 20 kann ein zweikomponentiger Mörtel sein und stammt beispielsweise aus einer bereits zerstörten Mörtelpatrone, die vor dem Einsetzen der Ankerstange 10 in das Bohrloch 12 eingeführt wurde.

Die Ankerstange 10 weist, wie auch in Figur 2 zu erkennen ist, einen Verankerungsbereich 22 und einen Befestigungsbereich 24 auf, die aneinander angrenzen. An der vom Befestigungsbereich 24 abgewandten Seite weist der Verankerungsbereich 22 eine Spitze 26 auf.

Der Verankerungsbereich 22 ist derjenige Bereich der Ankerstange 10, der bei ordnungsgemäßer Befestigung der Ankerstange 10 innerhalb des Bohrloches 12 liegt.

Dagegen ist der Befestigungsbereich 24 derjenige Bereich der Ankerstange 10, der außerhalb des Bohrloches 12 vorgesehen ist, zur Befestigung eines Bauteils.

Die Ankerstange 10 ist im Verankerungsbereich 22 mit einem Gewinde 28 versehen, das in der ersten Ausführungsform ein Rechtsgewinde ist. Das Gewinde 28 erstreckt sich von der Spitze 26 der Ankerstange 10 ausgehend in Richtung zum Befestigungsbereich 24.

Im Verankerungsbereich 22 ist zudem ein Rückhalteabschnitt 30 vorgesehen, der in der ersten Ausführungsform an den Befestigungsbereich 24 angrenzt. Der Rückhalteabschnitt 30 ist also an dem Ende des Verankerungsbereiches 22 angeordnet, das dem Befestigungsbereich 24 zugewandt ist.

Der Rückhalteabschnitt 30 weist in der ersten Ausführungsform fünf Ringnuten 32 auf.

Die Ringnuten 32 erstrecken sich um den gesamten Umfang der Ankerstange 10 herum und sind durch Stege 34, die den nominellen Durchmesser der Ankerstange 10 aufweisen, voneinander getrennt.

An den Rückhalteabschnitt 30 anschließend ist im Befestigungsbereich 24 eine Setztiefenmarkierung 35 vorgesehen.

Außerdem ist der Befestigungsbereich 24 mit einem Befestigungsgewinde 36 versehen, das zum Gewinde 28 des Verankerungsbereichs 22 gleichläufig ist. Das Befestigungsgewinde 36 ist in der gezeigten Ausführungsform also ebenfalls ein Rechtsgewinde.

Zur Befestigung der Ankerstange 10 im Bohrloch 12 wird die Ankerstange 10 rechtsdrehend eingedreht. Dabei zerstört die Ankerstange 10 die zuvor in das Bohrloch 12 eingebrachte Mörtelpatrone, wodurch die Mörtelmasse 20 der Mörtelpatrone freigegeben wird.

Beim Eindrehen wird die Mörtelmasse 20 zumindest im Bereich des Gewindes 28 in Richtung zur Mündung 16 des Bohrloches gefördert, da das Gewinde 28 ein Rechtsgewinde ist und die Ankerstange 10 rechtsdrehend in das Bohrloch 12 eingeführt wird.

Die durch das Gewinde 28 geförderte Mörtelmasse 20 wird jedoch nur bis zum Rückhalteabschnitt 30 gefördert, da durch die Ringnuten 32 keine Förderung der Mörtelmasse 20 mehr stattfindet. Zudem verhindern die Ringnuten 32 und die dazwischenliegenden Stege 34, dass die durch das Gewinde 28 geförderte Mörtelmasse 20 am Rückhalteabschnitt 30 vorbeigepresst wird. Somit verhindert der Rückhalteabschnitt 30 effektiv, dass Mörtelmasse 20 aus dem Bohrloch 12 gefördert wird.

Die Förderrichtung der Mörtelmasse 20 in den verschiedenen Abschnitten des Verankerungsbereiches 22 ist in allen Figuren durch die Pfeile angedeutet.

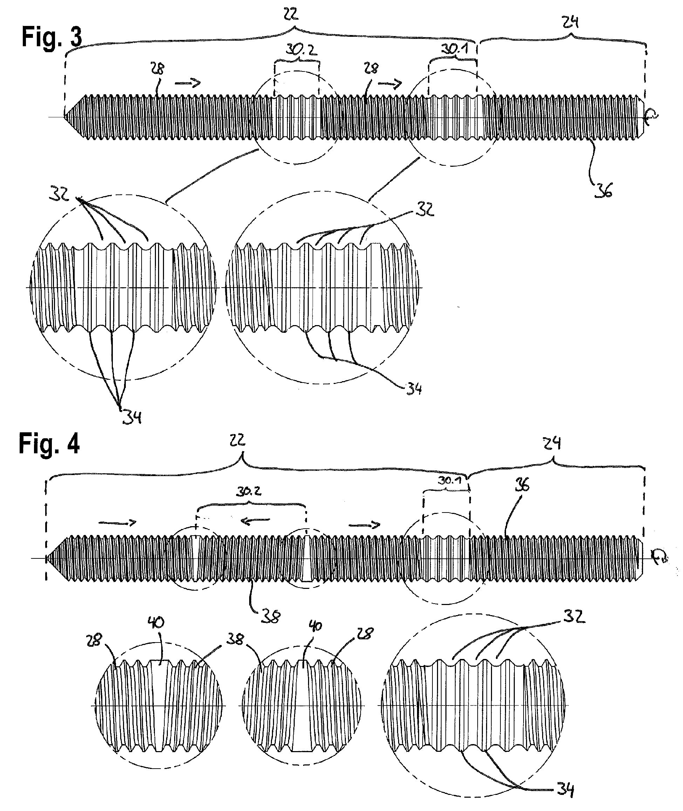

In den Figuren 3 bis 6 sind weitere Ausführungsformen der Ankerstange 10 dargestellt, die im Wesentlichen der Ankerstange 10 der ersten Ausführungsform entsprechen. Deswegen wird im Folgenden lediglich auf die Unterschiede eingegangen, wobei gleiche und funktionsgleiche Teil mit denselben Bezugszeichen versehen sind.

In einer zweiten Ausführungsform (Figur 3) ist ein Rückhalteabschnitt 30 wie in der ersten Ausführungsform an dem Ende des Verankerungsbereiches 22 vorgesehen, der an den Befestigungsbereich 24 grenzt. Im Folgenden wird dieser Rückhalteabschnitt 30 als hinterer Rückhalteabschnitt 30.1 bezeichnet.

Die Ankerstange 10 der zweiten Ausführungsform weist im Verankerungsbereich 22 neben dem hinteren Rückhalteabschnitt 30.1 auch einen weiteren Rückhalteabschnitt 30.2 auf, der als vorderer Rückhalteabschnitt 30.2 bezeichnet wird. Der vordere Rückhalteabschnitt 30.2 ist zwischen dem hinteren Rückhalteabschnitt 30.1 und der Spitze 26 der Ankerstange 10 vorgesehen.

Der vordere Rückhalteabschnitt 30.2 unterbricht das Gewinde 28, das zwischen den beiden Rückhalteabschnitten 30.1 und 30.2 fortgesetzt wird.

Wie der hintere Rückhalteabschnitt 30.1 weist auch der vordere Rückhalteabschnitt 30.2 mehrere Ringnuten 32 auf.

In der zweiten Ausführungsform sind im hinteren Rückhalteabschnitt 30.1 vier Ringnuten 32 und im vorderen Rückhalteabschnitt 30.1 drei Ringnuten 32 vorgesehen.

Durch den vorderen Rückhalteabschnitt 30.2 wird die Förderung der Mörtelmasse 20 durch das Gewinde 28 bereits näher an der Spitze 26 unterbrochen, sodass weniger Mörtelmasse 20 in den hinteren Rückhalteabschnitt 30.2 hineingepresst wird. Dadurch kann die Länge des hinteren Rückhalteabschnittes 30.1 verringert werden.

Die in Figur 4 dargestellte dritte Ausführungsform weist ebenso wie die zweite Ausführungsform nach Figur 3 einen vorderen Rückhalteabschnitt 30.2 und einen hinteren Rückhalteabschnitt 30.1 auf.

Der hintere Rückhalteabschnitt 30.1 weist in der dritten Ausführungsform drei Ringnuten 32 auf.

Im Unterschied zur zweiten Ausführungsform sind jedoch im vorderen Rückhalteabschnitt 30.2 keine Ringnuten 32 vorgesehen.

Vielmehr weist der vordere Rückhalteabschnitt 30.2 ein Rückhaltegewinde 38 auf, das zum Gewinde 28 gegenläufig ist. Das heißt, dass das Rückhaltegewinde 38 in der dritten Ausführungsform ein Linksgewinde ist.

Der vordere Rückhalteabschnitt 30.2, also das Rückhaltegewinde 38, ist vom Gewinde 28 durch jeweils eine Trennung 40 beabstandet.

Die Trennung 40 weist weder eine Nut noch ein Gewinde auf und kann den nominellen Durchmesser der Ankerstange 10 haben.

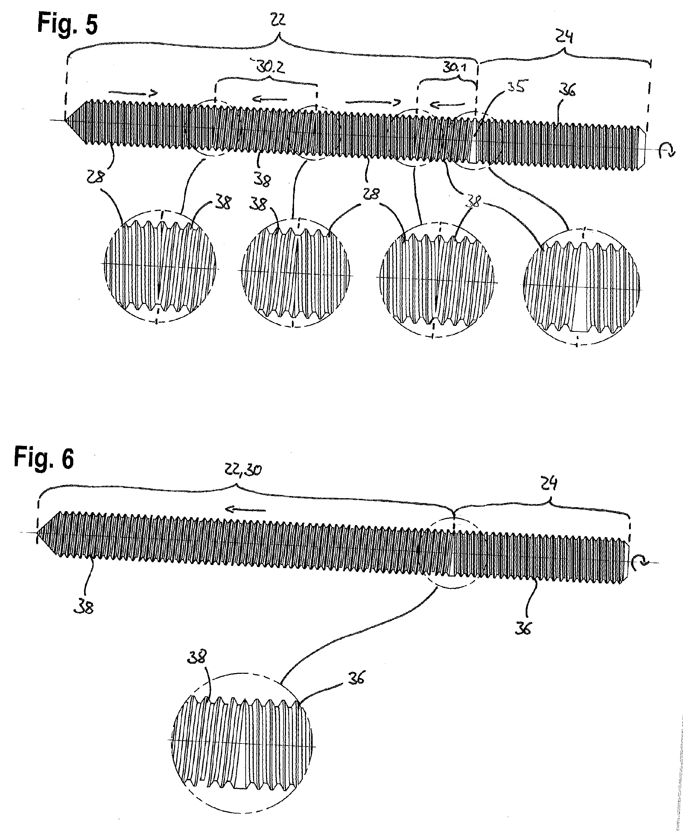

In der vierten Ausführungsform der Ankerstange 10 nach Figur 5 sind ebenfalls ein vorderer Rückhalteabschnitt 30.2 und ein hinterer Rückhalteabschnitt 30.1 vorgesehen, wobei beide Rückhalteabschnitte 30.1, 30.2 mit einem Rückhaltegewinde 38 versehen sind.

Im Gegensatz zur dritten Ausführungsform nach Figur 4 gehen in der vierten Ausführungsform nach Figur 5 die Rückhaltegewinde 38 und das Gewinde 28 bei jedem Übergang ineinander über.

Somit weist die Ankerstange der vierten Ausführungsform von der Spitze 26 aus betrachtet zunächst einen Abschnitt mit einem Rechtsgewinde, dann einen Abschnitt mit einem Linksgewinde, darauf wieder einen Abschnitt mit einem Rechtsgewinde und abschließend einen Abschnitt mit einem Linksgewinde auf.

Auf diese Weise werden vier Bereiche erzeugt, in denen die Förderung der Mörtelmasse 20 beim rechtsdrehenden Setzen der Ankerstange 10 in entgegengesetzte Richtungen gefördert wird. Insbesondere im hinteren Rückhalteabschnitt 30.1 wird die Mörtelmasse 20 zur Spitze 26 oder zum Bohrlochgrund 18 hin gefördert, wodurch sichergestellt ist, dass keine Mörtelmasse 20 aus dem Bohrloch 12 austritt.

Dabei ist zwischen dem hinteren Rückhalteabschnitt 30.1 und dem Befestigungsgewinde 36 des Befestigungsbereiches 24 wieder eine Setztiefenmarkierung 35 im Befestigungsbereich 24 vorgesehen.

In Figur 6 ist eine fünfte Ausführungsform der Ankerstange 10 dargestellt.

In dieser Ausführungsform erstreckt sich der Rückhalteabschnitt 30 entlang des gesamten Verankerungsbereiches 22.

Der Rückhalteabschnitt 30 ist als Rückhaltegewinde 38 ausgebildet, das in der gezeigten Ausführungsform ein Linksgewinde ist.

Das Rückhaltegewinde 38 ist dabei gegenläufig zum Befestigungsgewinde 36 des Befestigungsbereiches 24.

Außerdem ist die Richtung des Rückhaltegewindes 38 entgegen dem für die Ankerstange 10 beim Setzen vorgesehenen Drehsinn gewählt. Das heißt, dass das Rückhaltegewinde 38 ein Linksgewinde ist, wenn die Ankerstange 10 rechtdrehend gesetzt werden soll. Soll die Ankerstange 10 linksdrehend gesetzt werden, ist das Rückhaltegewinde 38 ein Rechtsgewinde.

Selbstverständlich lassen sich die Merkmale der gezeigten Ausführungsformen beliebig miteinander kombinieren. Beispielsweise ist es denkbar, dass in einem Rückhalteabschnitt 30 sowohl wenigstens ein Ringnut 32 als auch ein Rückhaltegewinde 38 vorgesehen sind.

Auch sind mehr als zwei Rückhalteabschnitte 30 im Verankerungsbereich 22 denkbar.

Ebenso ist die Anzahl der Ringnuten 32 in einem Rückhalteabschnitt 30 nicht auf drei, vier oder fünf Ringnuten 32 beschränkt, sondern kann beliebig gewählt werden.

## Patentansprüche

1. Ankerstange für ein Verbundankersystem mit einem Verankerungsbereich (22) und einem Befestigungsbereich (24), wobei der Verankerungsbereiche (22) wenigstens einen Rückhalteabschnitt (30; 30.1, 30.2) für Mörtelmasse (20) aufweist, nämlich ein Rückhaltegewinde (38) oder mehrere Ringnuten (32).

2. Ankerstange nach Anspruch 1, **dadurch gekennzeichnet, dass** an dem Ende des Befestigungsbereichs (24), das an den Verankerungsbereich (22) angrenzt, eine Setztiefenmarkierung (35) vorgesehen ist.

3. Ankerstange nach Anspruch 1 oder 2, **dadurch gekennzeichnet, dass** sich der wenigstens eine Rückhalteabschnitt (30; 30.1, 30.2) entlang des gesamten Verankerungsbereiches (22) erstreckt.

4. Ankerstange nach Anspruch 1 oder 2, **dadurch gekennzeichnet, dass** der Verankerungsbereich (22) ein Gewinde (28), insbesondere ein Rechtsgewinde aufweist, das von dem wenigstens einen Rückhalteabschnitt (30) unterbrochen ist.

5. Ankerstange nach Anspruch 4, **dadurch gekennzeichnet, dass** der wenigstens eine Rückhalteabschnitt (30) ein zum Gewinde (28) gegenläufiges Rückhaltegewinde (38), insbesondere ein Linksgewinde umfasst.

6. Ankerstange nach Anspruch 5, **dadurch gekennzeichnet, dass** das Gewinde (28) und das Rückhaltegewinde (38) ineinander übergehen.

7. Ankerstange nach Anspruch 4 oder 5, **dadurch gekennzeichnet, dass** der Rückhalteabschnitt (30) und das Gewinde (28) durch eine Trennung (40) beabstandet sind.

8. Ankerstange nach einem der vorhergehenden Ansprüche, **dadurch gekennzeichnet, dass** der wenigstens eine Rückhalteabschnitt (30; 30.1, 30.2) mindestens eine Ringnut, vorzugsweise drei, vier oder fünf Ringnuten (32), aufweist.

9. Ankerstange nach einem der vorhergehenden Ansprüche, **dadurch gekennzeichnet, dass** wenigstens zwei Rückhalteabschnitte (30.1, 30.2) vorgesehen sind, zwischen denen das Gewinde (28) fortgesetzt ist.

10. Ankerstange nach einem der vorhergehenden Ansprüche, **dadurch gekennzeichnet, dass** der wenigstens eine Rückhalteabschnitt (30; 30.1, 30.2) an dem Ende des Verankerungsbereiches (22) vorgesehen ist, das an den Befestigungsbereich (24) angrenzt.

11. Ankerstange nach einem der vorhergehenden Ansprüche, **dadurch gekennzeichnet, dass** der Befestigungsbereich (24) ein zum Gewinde (28) des Verankerungsbereichs (22) gleichläufiges Befestigungsgewinde (36), insbesondere ein Rechtsgewinde aufweist.
